# EUROPEAN PATENT APPLICATION

(11) **EP 4 243 472 A2**
(43) Date of publication of application: **13.09.2023**
(21) Application number: 23188344.8
(22) Date of filing: 25.10.2019
(51) Int. Cl.: H04W 12/10

(54) **RELIABLE TRANSPORT OF USER DATA VIA THE CONTROL PLANE**

(30) Priority: 26.10.2018 US 201862751153 P
(62) Divisional of application: 19797375.3
(71) Applicant: Telefonaktiebolaget LM Ericsson (publ), 164 83 Stockholm (SE)
(72) Inventor: PHAM VAN, Dung, SE-187 47 Täby (SE); WASS, Mikael, 511 69 Sätila (SE); STATTIN, Magnus, 194 44 Upplands Väsby (SE); YAVUZ, Emre, 117 50 Stockholm (SE); TIRRONEN, Tuomas, 00950 Helsinki (FI); HÖGLUND, Andreas, 170 62 Solna (SE); NAKARMI, Prajwol Kumar, 191 42 Sollentuna (SE); SCHLIWA-BERTLING, Paul, 590 71 Ljungsbro (SE)
(74) Representative: Haseltine Lake Kempner LLP

(57) **Abstract**

A method in a user equipment (UE) to mandate a first network node to provide a first indication to the UE, not after a second network node releases a radio resource control (RRC) connection, includes the steps of providing a Control Plane Service Request (CPSR) non-access stratum (NAS) message comprising user data to the first network node, and obtaining the first indication from the first network node, not after the second network node releases the RRC connection.

## Description

### TECHNICAL FIELD

The present disclosure relates, in general, to wireless communications and, more particularly, to reliable transport of user data via the control plane.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Third Generation Partnership Project (3GPP) specifications include technologies such as Machine-to-Machine (M2M) communication and Internet of Things (IoT). Recent work for 3GPP Release 13 and 14 includes enhancements to support Machine-Type Communications (MTC) with new user equipment (UE) categories (e.g., Cat-M1, Cat-M2), supporting reduced bandwidth of up to 6 and 24 physical resource blocks (PRBs), and Narrowband IoT (NB-IoT) UEs providing a new radio interface (and UE categories Cat-NB1 and Cat-NB2).

Herein, the LTE enhancements introduced in 3GPP Release 13, 14, and 15 for MTC are referred to as "eMTC," including (but not limited to) support for bandwidth limited UEs, Cat-M1, and support for coverage enhancements. This is to distinguish from NB-IoT, although the supported features are similar on a general level.

3GPP Release 13 includes cellular IoT (CIoT) Evolved Packet System (EPS) User Plane (UP) optimization and CIoT EPS Control Plane (CP) optimization signaling reductions for both eMTC and NB-IoT. CIoT EPS optimizations reduce signaling in support of small and infrequent data transmissions. CIoT EPS UP optimization, referred to herein as the UP-solution, enables the UE to resume a previously stored radio resource control (RRC) connection (also referred to as RRC Suspend/Resume). CIoT EPS CP optimization, referred to herein as the CP-solution, enables the transmission of user-plane data over non-access stratum (NAS) (also referred to as data over NAS (DoNAS)). In the CP-solution, transport of user data via the control plane is accomplished by encapsulating the data in NAS packet data units (PDUs) and using the NAS transport capabilities of the RRC and S1-AP protocols, as well as the data transport capabilities of GTP-u tunnels between both a mobility management entity (MME) and a serving gateway (S-GW) and a S-GW and a packet data network (PDN) gateway (P-GW). This helps to reduce the total number of control plane messages used when handling a short data transaction without a need for the activation of access stratum (AS) security functions, for example.

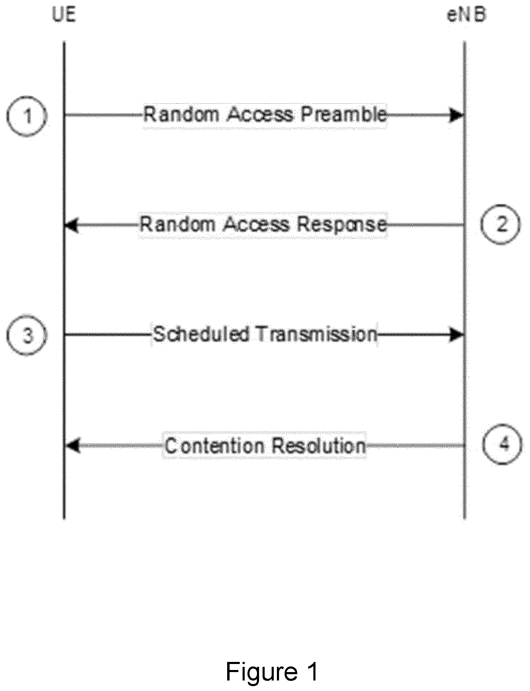

FIGURE 1 is a flow diagram illustrating an example random access message exchange. The messages in the random access procedure are commonly referred to as message 1 (Msg1) through message 4 (Msg4). FIGURE 1 illustrates the contention-based RA procedure as described in 3GPP TS 36.200: At step 1, the UE sends a random access preamble (Msg1) to the eNB. The eNB responds at step 2 with a random access response (Msg2). At step 3, the UE sends a scheduled transmission (Msg3) to the eNB. The eNB responds at step 4 with a contention resolution message (Msg4).

In 3GPP Release 15, early data transmission (EDT) for mobile-originated (MO) calls was recently introduced on top of the Release 13 UP solution and CP solution for both eMTC and NB-IoT. In MO EDT solutions, a UE with a small amount of uplink data can indicate its intention of using EDT by selecting an EDT preamble in random access Msg1. The eNB provides the UE with an EDT uplink grant, in Msg2, that allows the UE to transmit uplink data together with signaling in Msg3. Depending on uplink conditions, the UE selects a suitable value of transport block size (TBS) among the possible values specified based on the maximum TBS value as well as the permitted number of blind decodes (i.e., the number of TBS values smaller than the maximum value) broadcast in the system information. Downlink data, if any, can be included in Msg4 together with signaling that instructs the UE to remain in RRC_IDLE mode for power savings, if no further data transmission is expected. On the other hand, if more user data is available, Msg4 can instruct the UE to move to RRC_CONNECTED mode (i.e., establishing or resuming the RRC connection as in legacy implementations) for further data transmissions.

There currently exist certain challenges with EDT, relating to ensuring the reliability of the data transmissions. For example, in both Release 13 DoNAS and Release 15 CP-EDT solutions, user data is included in the Control Plane Service Request (CPSR) NAS message, whose NAS PDU is multiplexed with an RRC signaling message (e.g., Msg5 for Release 13 DoNAS and Msg3 for Release 15 CP-EDT) for delivery to the eNB. The eNB then forwards this UL NAS PDU to the MME in the S1AP Initial UE message procedure. However, as this is a class 2 S1AP procedure, the MME is not mandated to reply to the eNB once it has received the Initial UE message. Stated differently, there may be no S1AP Downlink message sent in response to the Initial UE message, and the MME can immediately command the eNB to release the RRC connection using the S1AP UE context release command message, which is, itself, without a DL NAS PDU. Therefore, it is possible that the UE will not receive any DL NAS PDU in response to transmitting the UL NAS PDU with the CPSR message that includes user data. Note that the CPSR message is security protected at the NAS layer with integrity protection and partial ciphering (of the user data part).

In TS 24.301, it is specified that the UE will consider the CPSR procedure as successfully completed if the NAS layer at the UE receives an indication from lower layers at the UE that the RRC connection has been released. Upon successful completion of the CPSR procedure, the UE shall reset the service request attempt counter, stop the retransmission timer, T3417, and enter the state EMM-REGISTERED. The timer T3417 is started when the CPRS message is sent and is then typically stopped when the UE receives a SERVICE ACCEPT or SERVICE REJECT. If the time expires, the UE is configured to abort the CPSR procedure.

A problem occurs when the RRC connection is released by the UE (i.e., the CPSR procedure is considered as successfully completed), while the UE received neither any security protected DL NAS message nor any AS security activation message. This is possible if a rogue network (e.g., one using false base stations) manages to successfully trigger the release of the RRC connection at the UE, without AS security activation and before the expiry of the T3417 timer at the UE. Note that, as stated in annex A.6 in TS36.331, the eNB can prematurely release an RRC connection (i.e., the RRCConnectionRelease(-NB) message can be sent unprotected before security activation). As an example, in CP-EDT, the network can send a RRCEarlyDataComplete message, which is used to complete the EDT procedure, in Msg4, without a DL NAS-PDU. Here, the UE remains in RRC_IDLE mode while the RRC layer at the UE indicates to upper layers that the RRC connection has been released. This can also be seen in the fallback of CP-EDT of any type. For example, this may occur when the UE initiates CP-EDT for transmission of user data via CPSR in Msg3 but it does not succeed. This may happen because the UE is not provided with a sufficient UL grant for data or because the network wants to continue with the connection establishment process for further data transmission. Accordingly, the UE falls back to use the legacy Release 13 DoNAS procedure to transmit the CPSR NAS PDU in Msg5. Since the RRCConnectionSetupComplete(-NB) containing the CPSR NAS PDU in Msg5 over SRB1 can also be sent before AS security activation (see also annex A.6 in TS36.331), if the eNB releases the RRC connection in Msg6, there is no security protection and no authentication mechanism between the UE and the network neither at NAS nor AS layers for the transaction of data transport via CPSR. Thus, this problem also exists in the Release 13 DoNAS solution if the network (eNB) prematurely releases the RRC connection without performing AS security activation (i.e., the AS security mode command procedure). A similar problem may occur in the case of mobile-terminated (MT) data transfer over the control plane (i.e., when the network wants to send DL data to the UE using CP solutions). Note that this is a problem that happens for both LTE-M (eMTC) and NB-IoT. **Error! Reference source not found.** shows an example of unreliable transport of UL data in CP-EDT in NB-IoT.

The consequences of such unreliable transport of user data transport via the control plane include: (1) that the UE/network cannot know whether it is accessing a legitimate network/UE; (2) that the UE/network cannot know whether its data transport via the CP was successfully delivered to the right destination; (3) that the UE may need to retry the CRSR until the service request attempt counter reaches 5 times; and (4) in cases where the upper layers (e.g., IP layer or protocols on top of IP layer) have an ACK mechanism, that the possible requests for retransmission from the upper layers may lead to multiple or even a continuous loop of repeating data transmissions over CPSR, thus unnecessarily draining the UE battery life. Here, the use of the term "loop" refers to the following: The UE will receive an indication from the upper layers to (re)transmit data, and the UE will again attempt to (re)transmit the data starting with CRSR as explained above. In such instance, the rogue network may again repeat its attack, triggering yet another (re)transmit attempt by the UE. These attack and (re)transmit steps could continue multiple times and potentially indefinitely, hence the "loop."

A Qualcomm Incorporated 3GPP submission ("Email discussion report: [99#45][NB-IoT/MTC] Early data transmission", R2-1710888, Prague, Czechia, Oct 2017) discloses a discussion on aspects of supporting early data transmission (EDT) during the RA procedure for UEs in IDLE mode.

WO 2018/031345 A1 discloses an apparatus of a User Equipment (UE) operable to communicate with a first Evolved Node B (eNB) and a second eNB on a wireless network. The apparatus comprises first circuitry operable to generate a security token, and second circuitry operable to generate a Radio Resource Control (RRC) message for transmission to the first eNB, in response to the UE detecting a Radio Link Failure (RLF) in communication with the second eNB, the RRC message comprising the security token.

CN 108616876 A discloses an AS (access stratum) security control method applied to a narrowband Internet of Things. The method includes a user equipment (UE) establishing a connection with a network side MME, transmitting a first NAS message CONTROL PLANE SERVICE REQUEST to a network side; and the network side MME receiving the NAS message CONTROL PLANE SERVICE REQUEST allocates AS security related parameters and sends the parameters to an eNB and the UE.

### SUMMARY

Certain aspects of the present disclosure and their embodiments may provide solutions to the above and/or other technical challenges. More specifically, proposed herein are solutions to improve the reliability of the transport of user data over the control plane (i.e., user data transmission using the Release 13 CP solution and/or the Release 15 CP-EDT solution). Although this disclosure focuses on LTE, NB-IoT, it is equally applicable for 5G/NR. In particular, discussed below is a way to verify that data transmission is directed towards a legitimate network/UE, and that the transmission is successful, by providing a security enabled message and/or security token information to the UE/network as a reply to UE-initiated data transmission using the control plane (i.e., either the UE using early data transmission for the control plane, or the Release 13 specified control plane solution for data transmission).

Proposed herein is a solution to enable reliable and secure transport of data via the control plane using Release 13 CIoT EPS optimization or Release 15 early data transmission, for transfer services configured with reliable delivery. The present invention is defined by the claims appended hereto.

Certain embodiments may provide one or more of the following technical advantage(s). For example, certain embodiments may enable reliable and secure transport of data via the control plane using Release 13 CIoT EPS optimization or Release 15 early data transmission, for both mobile-originated (MO) and mobile-terminated (MT) scenarios. Certain embodiments may also enable the UE to reduce overhead due to unnecessary repetition of the control plane service request procedure for re-transport of data via control plane, thus improving UE battery life. Furthermore, solutions presented herein provide backward compatibility.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 is a flow diagram illustrating an example random access message exchange;
FIGURE 2 provides an example of unreliable transport of UL data in CP-EDT in NB-IoT;
FIGURE 3 is an illustration of an exemplary wireless network, in accordance with certain embodiments;
FIGURE 4 is an illustration of an exemplary user equipment, in accordance with certain embodiments;
FIGURE 5 is an illustration of an exemplary virtualization environment, in accordance with certain embodiments;
FIGURE 6 is an illustration of an exemplary telecommunication network connected via an intermediate network to a host computer, in accordance with certain embodiments;
FIGURE 7 is an illustration of an exemplary host computer communicating via a base station with a user equipment over a partially wireless connection, in accordance with certain embodiments;
FIGURES 8-11 are flowcharts showing exemplary methods implemented in a communication system including a host computer, a base station and a user equipment, in accordance with certain embodiments;
FIGURES 12-13 are flowcharts showing exemplary methods implemented in a communication system including a user equipment, a network node, and an MME, in accordance with certain embodiments;
FIGURES 14-16 are flowcharts showing exemplary methods implemented in a communication system, in accordance with certain embodiments;
FIGURE 17 is an illustration of an exemplary MME, in accordance with certain embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

As described above, certain challenges currently exist with early data transmission (EDT). For example, unreliable transport of user data transport via the control plane may lead to (1) the UE/network not knowing whether it is accessing a legitimate network/UE; (2) the UE/network not knowing whether its data transport via the CP was successfully delivered to the right destination; (3) the UE needing to retry the CRSR until the service request attempt counter reaches 5 times; and (4) in cases where the upper layers (e.g., IP layer or protocols on top of IP layer) have an ACK mechanism, requests for retransmissions from the upper layers leading to multiple or even a continuous loop of repeating data transmissions over CPSR, thus unnecessarily draining the UE battery life.

This disclosure contemplates solutions to enable reliable and secure transport of data via the control plane. In certain embodiments, the UE and network configure/agree on which UL bearers the reliable delivery of user data is required/mandatory via signaling. Such a configuration allows for both reliable data transfer service via the CP with an authentication/signaling mechanism between the UE and the network (described in further detail below) as well a transfer service without such a mechanism. This configuration can be determined, for example, based on type of the application (for example, via subscription et cet.). For example, in the case of MO transport of user data via the CP, if data from a bearer configured for reliable transfer is included in Msg3, in case of Release 13 CP-EDT, or in Msg5, in case of Release 13 DoNAS, the UE requires a security protected response. If only data from bearer(s) not configured for reliable initial transfer is included in Msg3/Msg5, the UE does not need to receive a security protected response. This setting (i.e., handling reliability based on configuration) is, in principle, also applicable to the MT transport of DL data via control plane solutions including MT DoNAS and MT CP-EDT.

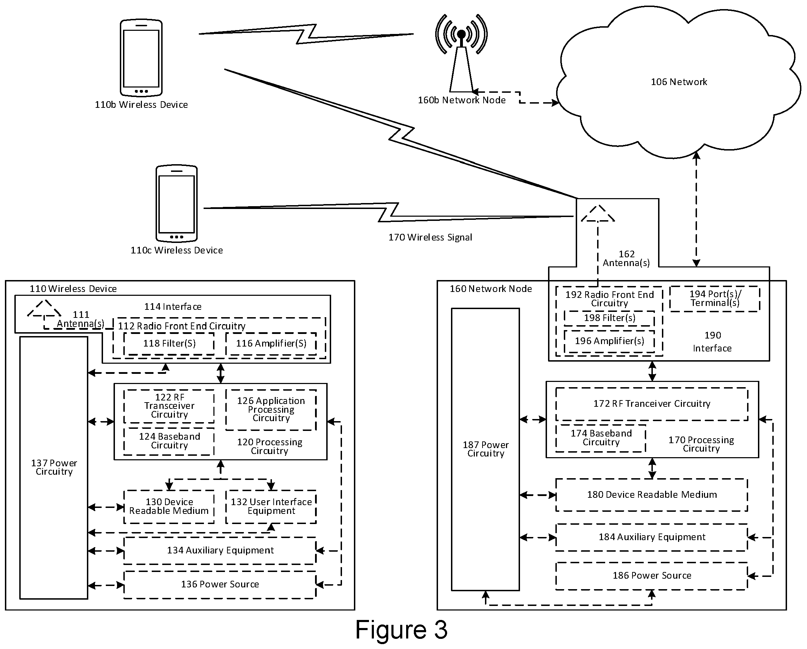

Currently, before the expiry of the T3417 retransmission timer, if the NAS receives an indication from lower layers that the RRC connection is released, the CPSR is considered successfully completed (i.e., UE shall reset the service request attempt counter, stop the retransmission timer T3417, and enter the state EMM-REGISTERED (described in section 5.6.1.4.2 of TS24.301)). However, in order for the UE to know that the network (eNB) is legitimate/authenticated, there should be an authentication/signaling mechanism. In certain embodiments, the NAS layer shall not consider the CPSR procedure as successful based on the indication from lower layers that the RRC connection is released, unless the authenticity of the network has been successfully verified. These and other embodiments of solutions for the UE/network to verify the authenticity of the network/UE are presented in more detail using FIGURES 3-22.

FIGURE 3 is an illustration of an exemplary wireless network, in accordance with certain embodiments. Although the subject matter described herein may be implemented in any appropriate type of system using any suitable components, the embodiments disclosed herein are described in relation to a wireless network, such as the example wireless network illustrated in FIGURE 3. For simplicity, the wireless network of FIGURE 3 only depicts network 106, network nodes 160 and 160b, and WDs 110, 1 10b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 3, network node 160 includes processing circuitry 170, device readable medium 180, interface 190, auxiliary equipment 184, power source 186, power circuitry 187, and antenna 162. Although network node 160 illustrated in the example wireless network of FIGURE 3 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 3 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

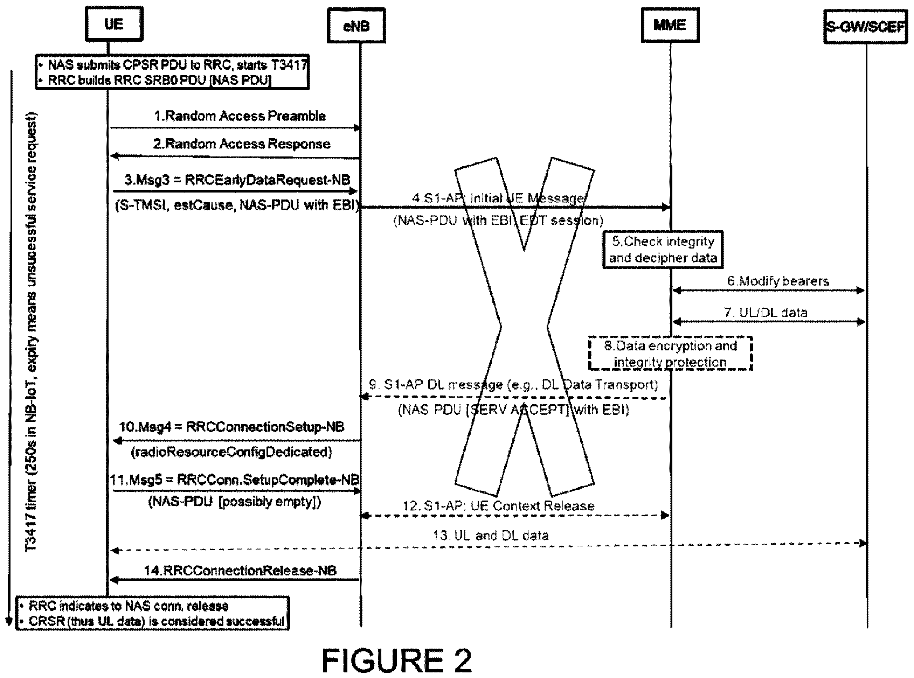

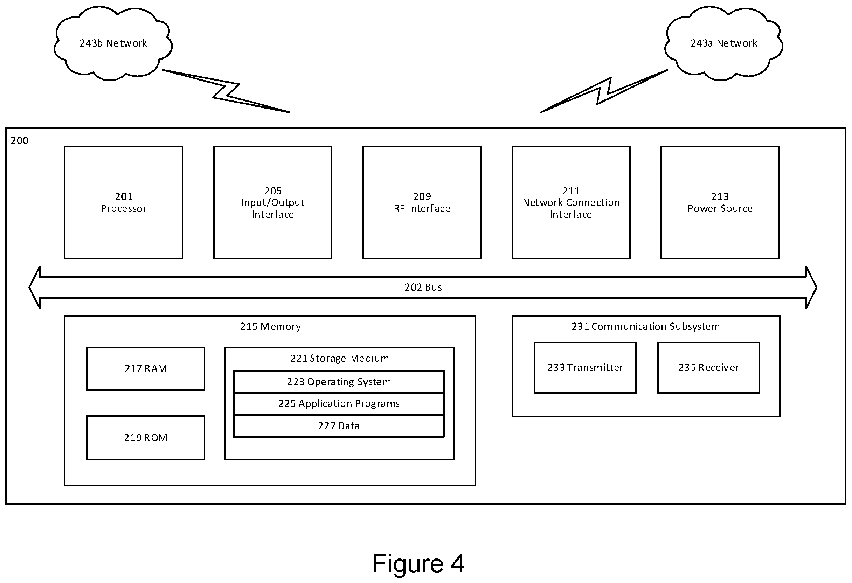

FIGURE 4 is an illustration of an exemplary user equipment, in accordance with certain embodiments. FIGURE 4 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3rd Generation Partnership Project (3GPP), including a NB-IoT UE, a machine type communication (MTC) UE, and/or an enhanced MTC (eMTC) UE. UE 200, as illustrated in FIGURE 2, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIGURE 2 is a UE, the components discussed herein are equally applicable to a WD, and vice-versa.

In FIGURE 4, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 4, or only a subset of the components. The level of integration between the components may vary from one UE to another UE. Further, certain UEs may contain multiple instances of a component, such as multiple processors, memories, transceivers, transmitters, receivers, etc.

In FIGURE 4, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 4, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 4, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

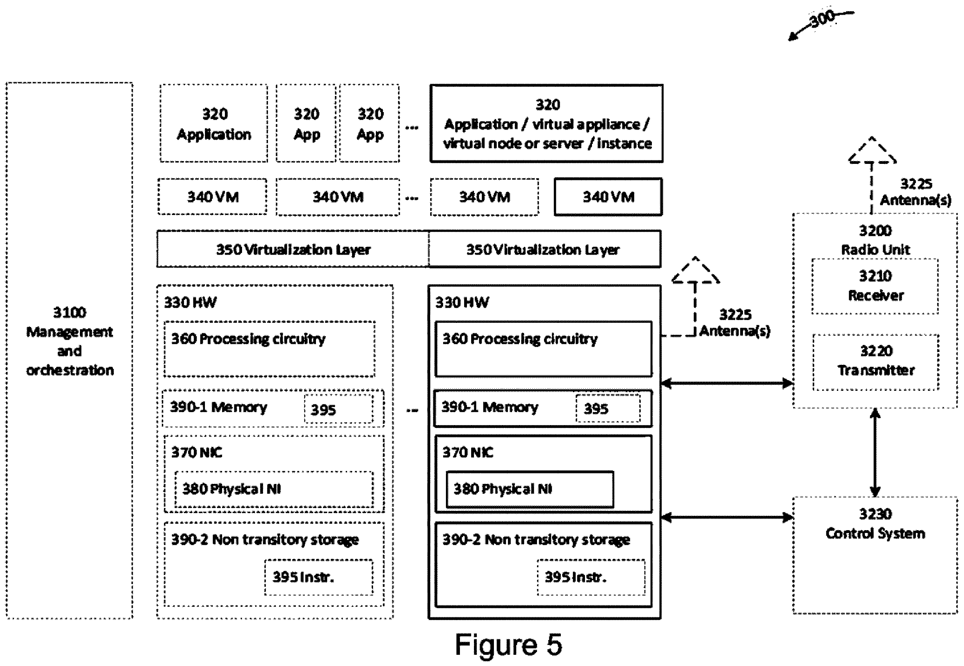

FIGURE 5 is an illustration of an exemplary virtualization environment, in accordance with certain embodiments. FIGURE 5 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 5, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 5.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

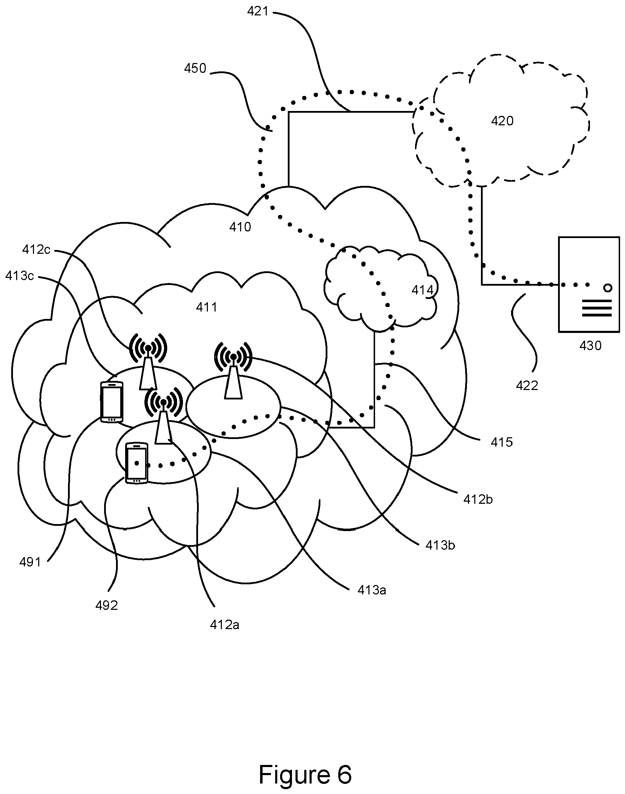

FIGURE 6 is an illustration of an exemplary telecommunication network connected via an intermediate network to a host computer, in accordance with certain embodiments. With reference to FIGURE 6, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 6 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

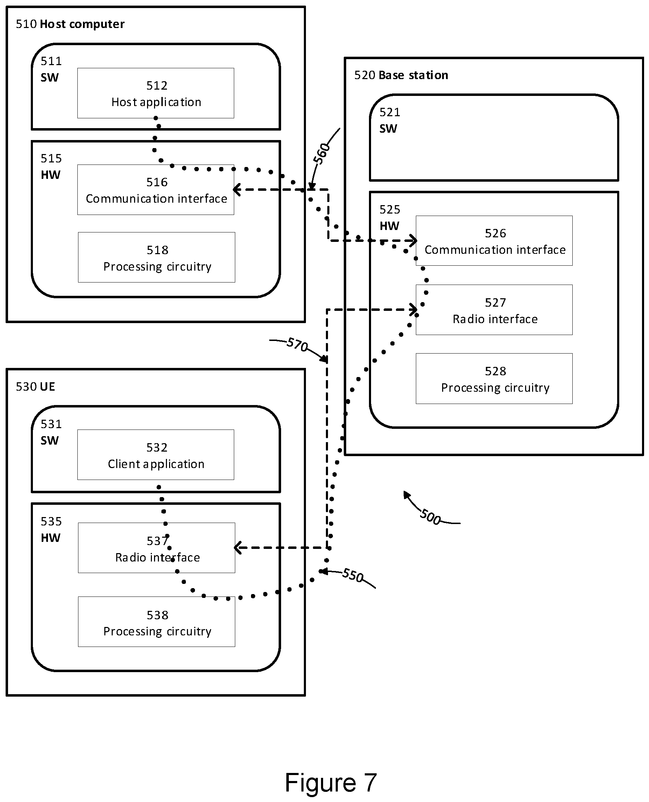

FIGURE 7 is an illustration of an exemplary host computer communicating via a base station with a user equipment over a partially wireless connection, in accordance with certain embodiments. Example implementations, in accordance with an embodiment, of the UE, base station and host computer discussed in the preceding paragraphs will now be described with reference to FIGURE 7. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 7) served by base station 520. Communication interface 526 may be configured to facilitate connection 560 to host computer 510. Connection 560 may be direct or it may pass through a core network (not shown in FIGURE 7) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 7 may be similar or identical to host computer 430, one of base stations 412a, 412b, 412c and one of UEs 491, 492 of FIGURE 6, respectively. This is to say, the inner workings of these entities may be as shown in FIGURE 7 and independently, the surrounding network topology may be that of FIGURE 6.

In FIGURE 7, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the response time of the network, specifically a NG-RAN, by allowing a gNB-DU to inform a gNB-CU about the outcome of a UE admission and thereby provide benefits such as reduced user waiting time and improved network responsiveness.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

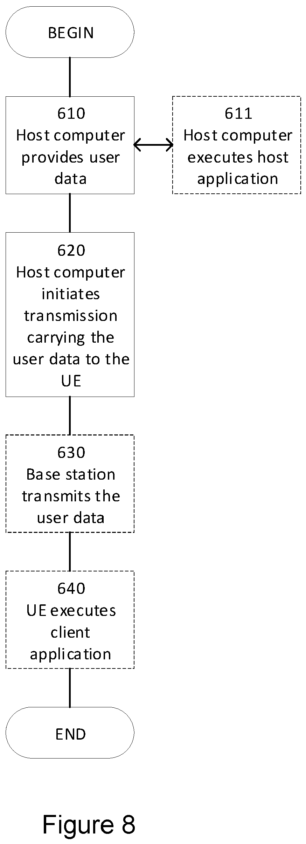

FIGURE 8 is a flowchart illustrating a method implemented in a communication system, in accordance with one embodiment. The communication system includes a host computer, a base station and a UE which may be those described with reference to FIGURES 6 and 7. For simplicity of the present disclosure, only drawing references to FIGURE 8 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

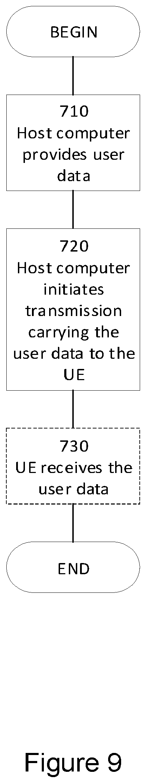

FIGURE 9 is a flowchart illustrating a method implemented in a communication system, in accordance with one embodiment. The communication system includes a host computer, a base station and a UE which may be those described with reference to FIGURES 6 and 7. For simplicity of the present disclosure, only drawing references to FIGURE 9 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

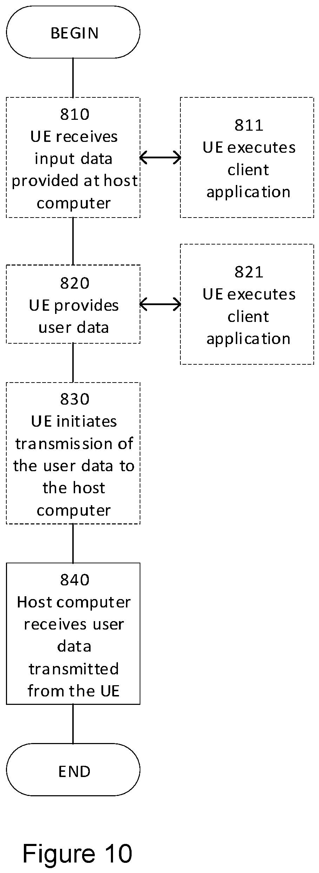

FIGURE 10 is a flowchart illustrating a method implemented in a communication system, in accordance with one embodiment. The communication system includes a host computer, a base station and a UE which may be those described with reference to FIGURES 6 and 7. For simplicity of the present disclosure, only drawing references to FIGURE 10 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

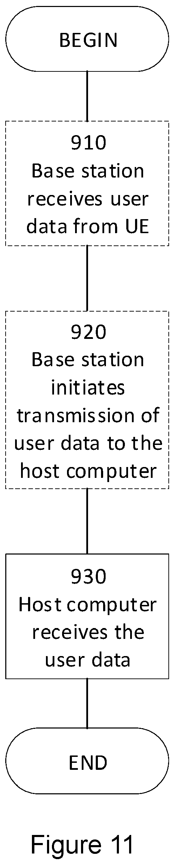

FIGURE 11 is a flowchart illustrating a method implemented in a communication system, in accordance with one embodiment. The communication system includes a host computer, a base station and a UE which may be those described with reference to FIGURES 6 and 7. For simplicity of the present disclosure, only drawing references to FIGURE 11 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

### Mandatory security protected DL NAS message in response to the NAS CPSR message

In some embodiments, a UE configured with reliable transport of user data via the CP explicitly requires the MME to send a security protected DL NAS message in response to the CPSR message, as described below.

In certain embodiments, as part of a process to initiate reliable transport of user data via the CP, a UE performing CP solutions does not set the NAS RAI in the ESM DATA TRANSPORT message inside the CPSR even if no further UL or DL data transmission is expected to ensure that a security protected DL NAS message shall be sent in response. Alternatively, the UE may set the NAS RAI as if there is one single DL data transmission and no further expected UL data transmission, even if this is not the case.

In an alternative embodiment, as part of a process to initiate reliable transport of user data via the CP, the UE may provide an indication to the MME, requesting a security protected DL NAS message, by using a newly defined indication either in the ESM DATA TRANSPORT message or in the CPSR message itself. Such a new indication may be a new field in the messages or may be realized using spare bit(s) of the RAI field in the ESM DATA TRANSPORT message. Alternatively, this new functionality may implicitly always used, based on the UE capability UE category (i.e., based on information available to the network).

If the MME receives a CPSR message with such an indication/request, except for the case of SERVICE REJECT, it shall respond with a security protected NAS message. For example, the MME may respond with a NAS message containing only a NAS Message Authentication Code (MAC) (i.e., simplified for reduced overhead), or a NAS message with dummy data and containing NAS MAC, or SERVICE ACCEPT or ESM DATA TRANSPORT by using a S1AP procedure (e.g., the Downlink NAS transport or the Connection establishment indication with extension to have a NAS-PDU IE), irrespective of there is DL user data or not. In an alternative embodiment, the response may be any other type of indication (e.g., optimized to reduce to signaling overhead and possibly integrity protected). For example, in one embodiment the indication from the UE may be a random number appended to the UL NAS PDU and the MME may then respond with the same number in the DL NAS PDU.

This disclosure contemplates that the UE only considers its user data as having been successfully delivered to a legitimate network when it receives a DL NAS PDU that successfully passes an integrity check. In addition, the UE does not consider the CPSR procedure successful if it has not received any DL NAS PDU with integrity check successful even if the RRC connection is released.

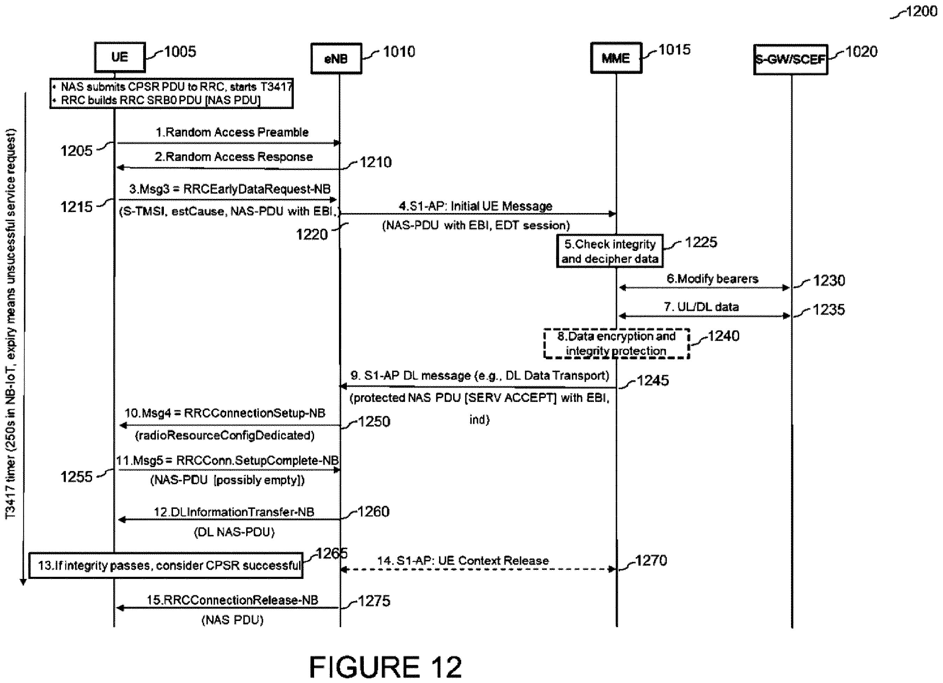

FIGURE 12 illustrates an example signaling flow, in which a mandatory security protected DL NAS message is provided to the UE (1005). In some embodiments, and as illustrated in FIGURE 12, the MME (1015) and eNB (1010) are mandated to provide the UE (1005) configured with reliable transport of user data via the CP with a security protected DL NAS message in response to the UE (1005) providing the CPSR message (irrespective of any indication from the UE (1005) or not).

Once the MME (1015) receives the CPSR message, except for the case of SERVICE REJECT, it is mandated to send a Downlink S1AP message containing a security protected DL NAS message to the eNB (1010). This disclosure contemplates that the security protected NAS message may be, for example, SERVICE ACCEPT, a NAS message containing only a NAS MAC simplified for reduced overhead, a NAS message with dummy data and containing NAS MAC, of ESM DATA TRANSPORT with or without user data.

The MME (1015) indicates to the eNB (1010) in the Downlink S1AP message that the DL NAS PDU needs to be forwarded to the UE (1005) before the RRC connection can be released. In an alternative embodiment, the eNB (1010) instead receives this indication from the UE (1005) as part of the process to initiate reliable transport of user data via the control plane. In this case, the RRC message carrying the UL CPSR message may be extended to include such an indication.

This disclosure contemplates that the eNB (1010) forwards the DL NAS PDU to the UE (1005) not after releasing the RRC connection. For example, in the case of CP-EDT, the eNB (1010) may forward the DL NAS PDU to the UE (1005) in the RRC message in Msg4 (1250). If the eNB (1010) intends to complete EDT procedure, Msg4 (1250) should include the RRCEarlyDataComplete(-NB) with the DL NAS PDU. Otherwise, if the eNB (1010) wants the UE (1005) to continue setting up the connection, a new RRC message is defined whose content is similar to the RRCConnectionSetup(-NB) with a dedicatedDataInfoNAS IE. Alternatively, the RRCEarlyDataComplete(-NB) can also be used. In this case, a new flag can be introduced to allow the UE (1005) to continue the connection setup (i.e., by entering RRC_CONNECTED mode). As another example, in the case of DoNAS, the eNB (1010) can forward the DL NAS PDU using the existing DLInformationTransfer message.

In certain embodiments, in both the case of CP-EDT and DoNAS, the DL NAS PDU may be included in the RRC message transmitted after Msg4 (1250), that releases the RRC connection. This can be the RRCConnectionRelease(-NB) with an extension to include a dedicatedDataInfoNAS IE or a newly defined RRC message whose function is to carry the DL NAS PDU and at the same time release the correction.

In some embodiments, the mechanism for eNB (1010) to release the connection is configurable, so that the eNB (1010) may release the connection after some time period has passed even without a reply from the MME (1015). This is to avoid the situation where the eNB (1010) would keep waiting for a long time for a response from the MME (1015). The time duration that the eNB (1010) is mandated to wait for a response before releasing the connection may correspond to a configurable timer, where the eNB (1010) shall not send a release message as long as the timer is running. In another example the timer is specified in specifications.

In response to receiving the security protected DL NAS message, the UE (1005) determines the completion of the CPSR procedure as well as of the success of data transport via the CP according to an integrity check of the DL NAS message. If the check fails, user data should be retransmitted. If the UE (1005) receives a release message before a DL NAS message, it should consider the CPSR procedure as unsuccessful and that the data was not successfully delivered.

### Mandatory security information in response to the NAS CPSR message

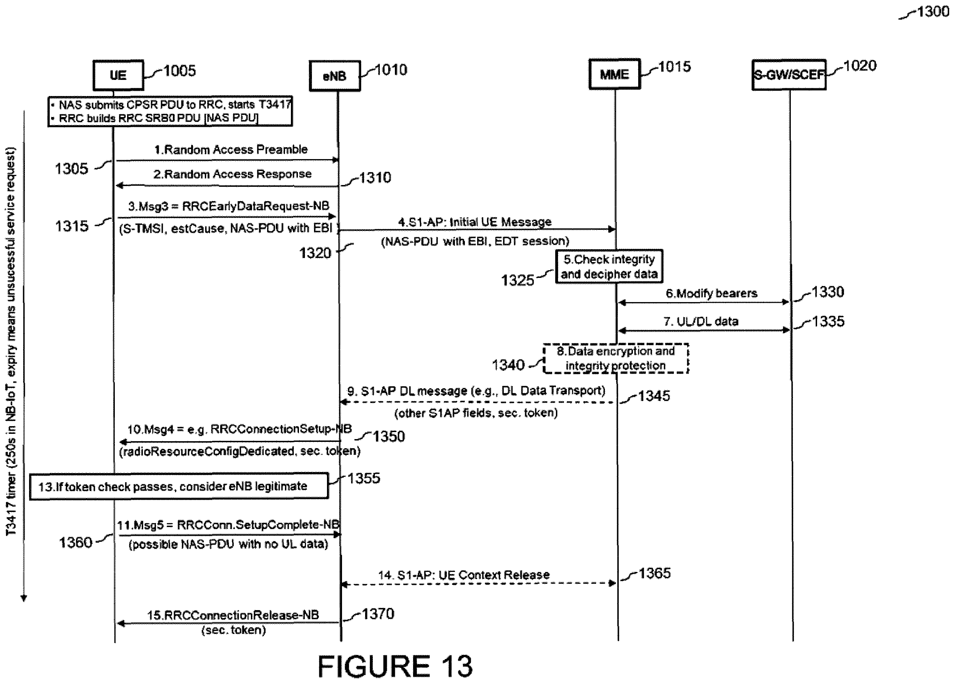

As an alternative to the ideas presented in the previous section, in response to obtaining the NAS CPSR message, the MME (1015) and the eNB (1010) may provide security information at the NAS layer or the RRC layer, or using other types of AS layer signaling to the UE (1005), configured with reliable transport of user data, so that the UE (1005) may verify the authenticity of the network. FIGURE 13 illustrates an example signaling flow for providing this security information, in embodiments in which the MME (1015) and the eNB (1010) are mandated to provide the UE (1005) with the security information in response to obtaining the CPSR message.

In certain embodiments, having security key material and an input parameter, the MME (1015) may compute a security token, similar to the NAS token as specified in 3GPP TS 33.401 and then send it to the eNB (1010) to indicate that it has successfully received UL data. This security token is one example. Another example is a next number from pre-agreed sequence of numbers.

The MME (1015) may send the security token in any S 1AP DL message. For example, the MME (1015) need not send the security token in an S1AP DL message with a DL NAS PDU. As an example, the token may be sent in the S1AP UE Context Release Command.

The eNB (1010) may send the security token to the UE (1005) in Msg4 (1350) (e.g., in the case of Release 15 CP-EDT) or in Msg6 (e.g., in the case of Release 13 DoNAS). In the case of CP-EDT, the RRCEarlyDataComplete(-NB) message defined in Release 15 CP-EDT may be extended to include the security token. Alternatively, in cases in which an indication is provided to the UE (1005) to move to RRC_CONNECTED mode, a new RRC message may be defined to include the security token rather than the RRCConnectionSetup(-NB) in Msg4 (1350). Alternatively, the security token may also be sent in the RRC message that releases the RRC connection (i.e., RRCConnectionRelease(-NB)) (1370).

At the UE (1005) side, the RRC layer, upon reception of the RRC message with the token, provides upper layers (e.g., the NAS layer) with the token for a security check. In this case the upper layer checks the security token. In certain embodiments, the AS layer (for example RRC) may itself check that the token has valid integrity protection. In response to receiving the security token, the UE (1005) determines if it is connecting to a legitimate network and considers that its data has been successfully delivered according to the verification of the token.

In some embodiments, a NAS MAC, random number, or similar token, calculated using security keys/information and/or UE provided information, or otherwise intended as a reply to the UE (1005), is provided by the MME (1015) to the eNB (1010). The eNB (1010) then includes the token in AS layer signaling to the UE (1005) for verification. For example, the eNB (1010) may include the token in an RRC message, or embedded otherwise in a message from eNB (1010) to the UE (1005) (e.g., in a MAC protocol control element).

### Reliable mobile-terminated transport of user data via CP

The ideas presented above for MO transport of user data via CP solutions are, to some extent, applicable to the mobile-terminated (MT) CP solutions, especially MT CP-EDT. In MT CP solutions, the network with DL data pages the UE (1005) for a service request. The UE (1005) also performs the CPSR but without including UL data. In Relesase 13 DoNAS, the network may piggyback the DL NAS message (i.e., ESM DATA TRANSPORT) containing DL data in an RRC DLInformationTransfer message, which is sent after the network has received the security protected UL CPSR (i.e., after the authenticity of the UE (1005) has been checked).

However, in the context of MT EDT, DL data may be sent even earlier, for example, in the second message (Msg2) or in Msg4 of the random access procedure. In these cases, if the DL data is associated with a reliable transfer service, it is desirable that the network can verify the authenticity of the UE (1005) to which it is sending MT DL user data via the control plane.

In some embodiments, the UE (1005) is required to provide the network (eNB (1010) and/or MME(1015)) configured with reliable transport of user data via the CP with a security protected UL NAS message in response to the DL NAS message containing user data. For example, in the case in which DL data transport is performed before Msg4 in the random access procedure, the UE (1005) is mandated to respond with a security protected NAS message or security information to the network in Msg3. In this case, Msg3 may, for example, correspond to the first UL transport block/MAC PDU/data transmission in contention free random access. As another example, Msg3 maybe the first UL TB/MAC PDU/data transmission after the RA procedure.

In certain embodiments, the security protected NAS message may be the CPSR without UL data. Alternatively, a new security protected NAS message, with a simplified number of fields (e.g., without ESM DATA TRANSPORT IE) may be defined for the purpose of reduced overhead. In some embodiments, the RRC message that carries the NAS message may be, for example, RRCEarlyDataRequest in Msg3. Alternatively, in some embodiments, a new RRC message may be defined with an AS security token, similar to the shortResumeMAC-I defined for the resume request. In this case, the AS layer at the UE (1005) and network interacts with upper layers regarding the verification of the token.

In the case in which DL data transport is performed in Msg4, the UE (1005) is mandated to either send a security protected NAS message or security information to the network in Msg3 or in Msg5. For the case in which the UE (1005) is mandated to send the security protected NAS message or security information to the network in Msg3, Msg3 may include a security protected NAS message (i.e., a CPSR message without user data), which is carried by an RRC message similar to the RRCEarlyDataRequest message. Alternatively, a new RRC message in Msg3 may be defined which includes a security token similar to the shortResumeMAC-I in the case of a user plane resume message.

In certain embodiments, if there is neither AS nor NAS security support in Msg3, Msg5 should instead include a security protected NAS message (i.e., a CPSR message without user data), which is carried by an RRC message similar to the RRCConnectionSetupComplete message. Alternatively, a new RRC message in Msg5 may be defined which includes an AS security token similar to the shortResumeMAC-I in the connection resume procedure.

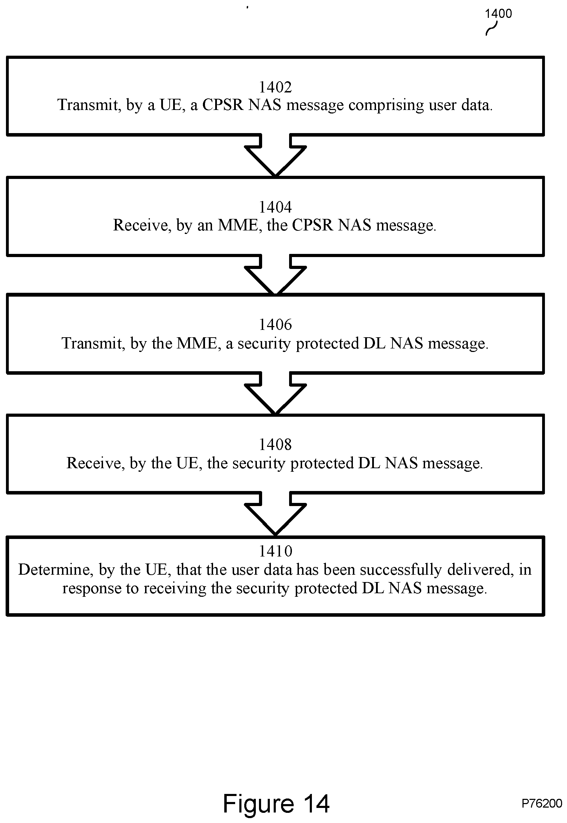

FIGURES 14-16 are flowcharts further illustrating the above exemplary methods implemented in a communication system, in accordance with certain embodiments. In FIGURE 14, the procedure by which a mandatory first indication (e.g., a security protected DL NAS message) is transmitted, in response to the UE providing a NAS CPSR message and not after an RRC connection is released, is presented.

In step 1402, a UE (1005) transmits a CPSR NAS message that includes user data to a first network node. In some embodiments, the first network node is an MME (1015). In certain embodiments, transmitting the CPSR NAS message to the first network node includes transmitting the CPSR NAS message to a second network node, which then forwards the CPSR NAS message to the first network node. In some such embodiments, the second network node is a Radio Access Network (RAN) node (1010).

In step 1404, the first network node obtains the CPSR NAS message. In certain embodiments, the CPSR NAS message may include a second indication to the first network node requesting that the first network node provide a first indication to the UE (1005), in response to obtaining the CPSR NAS message. In some such embodiments, the second indication to the first network node may include any of an absence of a release assistance indication (RAI) in an ESM DATA TRANSPORT message of the CPSR NAS message, even if the UE (1005) expects no further uplink (UL) or DL data transmissions, a presence of the RAI in the ESM DATA TRANSPORT message of the CPSR, the RAI set to indicate that the UE (1005) expects a single DL data transmission and no further UL data transmissions, an indication in a new field of the ESM DATA TRANSPORT message of the CPSR NAS message, and indication in a new field of the CPSR NAS message, and an indication using spare bits of the RAI field in the ESM DATA TRANSPORT message of the CPSR NAS message. Alternatively, the second indication to the first network node may include a random number appended to the CPSR NAS message.

In step 1406, the first network node transmits the first indication to the UE (1005), not after the second network node releases the RRC connection. In certain embodiments, the first indication to the UE (1005) includes a security protected DL NAS message. In some such embodiments, the security protected DL NAS message includes at least one of dummy data and a NAS MAC, a NAS MAC without dummy data, dummy data and a SERVICE ACCEPT message, dummy data and an ESM DATA TRANSPORT message, and an ESM DATA TRANSPORT message without dummy data.

In step 1408, the UE (1005) obtains the first indication from the first network node. In certain embodiments, obtaining the first indication from the first network node includes obtaining the first indication from the second network node, where the second network node obtained the first indication from the first network node. In such embodiments, the second network node provides the first indication to the UE (1005) not after releasing the RRC connection. In embodiments in which the UE (1005) obtains the first indication from the second network node, step 1402 may further include the UE (1005) providing an indication to the second network node, indicating that the second network node is to forward the first indication to the UE (1005), not after the second network node releases the RRC connection. For example, the UE (1005) may provide the CPSR NAS message and the indication to the second network node in an RRC message.

In certain embodiments in which the second indication to the first network node includes a random number appended to the CPSR NAS message, the first indication may also include the random number.

In some embodiments, the UE (1005) may obtain the first indication in at least one of an RRC message and a DLInformationTransfer message. Here, the RRC message may include at least one of an RRCEarlyDataComplete(-NB) message, a new RRC message that includes a dedicatedDataInfoNAS IE, and RRCConnectionRelease(-NB) message, and a new RRC message configured to carry the DL NAS message and to release the RRC connection.

In step 1410, in response to receiving the first indication, the UE (1005) determines that the user data has been successfully delivered. For example, in certain embodiments, the UE (1005) may determine that the user data has been successfully delivered by performing an integrity check of the first indication.

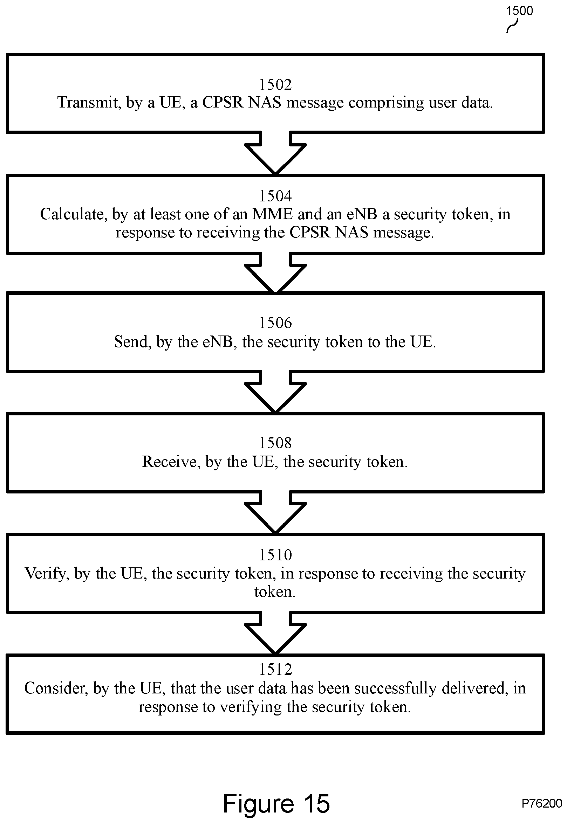

FIGURE 15 presents the procedure by which mandatory security information is transmitted, in response to the UE (1005) providing a NAS CPSR message, so that the UE (1005) may verify an authenticity of the network.

In step 1502, the UE (1005) provides a CPSR NAS message that includes user data. In certain embodiments, providing the CPSR NAS message includes providing the CPSR NAS message to a second network node, which then forwards the CPSR NAS message to a first network node. In some embodiments, the first network node is and MME (1015). In some embodiments, the second network node is a RAN node (1010).

In step 1504, in response to obtaining the CPSR NAS message, at least one of the first network node and the second network node determines an indication. In certain embodiments, the indication is a security token calculated using at least one of security keys, security information, and information that has been provided by the UE (1005). In some embodiments, the indication is a NAS message which is security protected with a MAC. In other embodiments, the indication is a random number.

In step 1506, the second network node provides the indication to the UE (1005). In certain embodiments, the second network node obtains the indication from the first network node. In some such embodiments, the indication is provided to the second network node in an S1-AP DL message.

In step 1508, the UE (1005) obtains the indication. In certain embodiments, the UE (1005) obtains the indication from the second network node. In some such embodiments, the UE (1005) obtains the indication from the second network node in at least one of an RRCEarlyDataComplete(-NB) message, an RRC message terminating a CIoT EPS CP optimization data transaction, a new RRC message defined to include the indication rather than an RRCConnectionSetup(-NB) message, and RRC message that releases an RRC connection, and a MAC protocol control element.

In step 1510, in response to obtaining the indication, the UE (1005) verifies an authenticity of the indication. In step 1512, in response to verifying the authenticity of the indication, the UE (1005) considers that the user data has been successfully delivered.

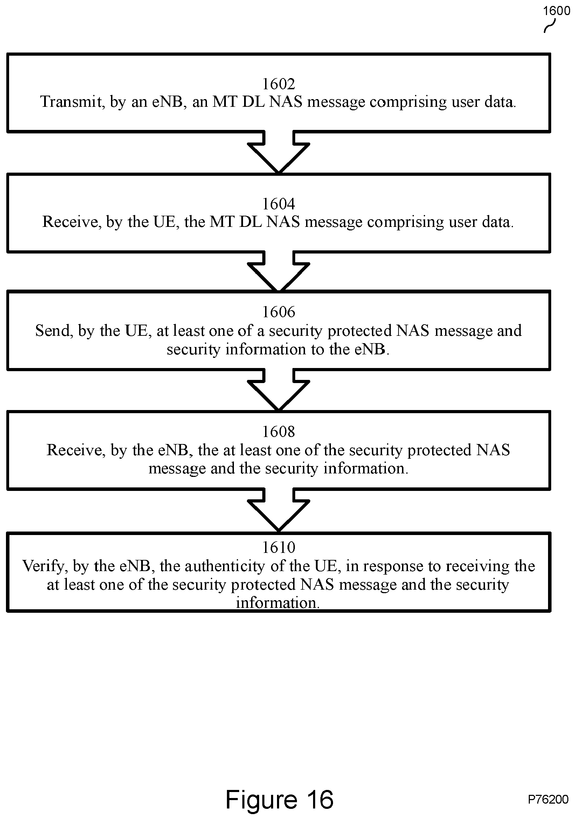

FIGURE 16 presents the procedure for reliable mobile-terminated transport of user data via the CP.

In step 1602, a network node transmits an MT DL NAS message that includes user data. In certain embodiments, the network node is a RAN node (1010). In step 1604, a UE (1005) obtains the MT DL NAS message. In step 1606, in response to obtaining the MT DL NAS message, the UE (1005) provides at least one of a security protected NAS message and security information. In certain embodiments, the security protected NAS message includes at least one of a CPSRNAS message without UL data and a new security protected NAS message.

In step 1608, the network node obtains the at least one of the security protected NAS message and the security information. In certain embodiments, obtaining the at least one of the security protected NAS message and the security information includes receiving an RRC message that includes the at least one of the security protected NAS message and the security information. In some such embodiments, the RRC message may include at least one of an RRCEarlyDataRequest message and a new RRC message. The new RRC message may be defined with an AS security token.

In step 1610, the network node verifies the authentication of the UE (1005), in response to receiving the at least one of the security protected NAS message and the security information.

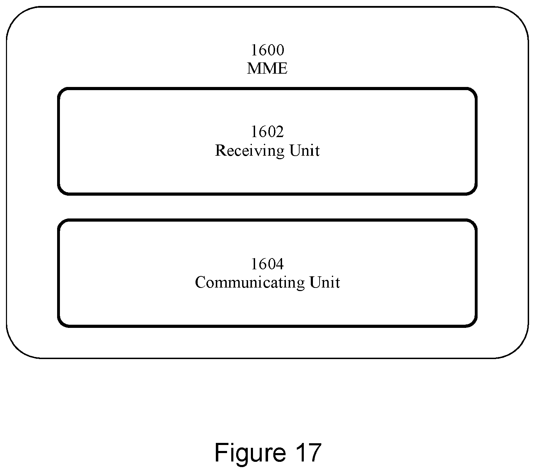

FIGURE 17 illustrates a schematic block diagram of an MME 1600 in a wireless network (for example, the wireless network shown in FIGURE 3). The MME may be implemented in a wireless device or network node. MME 1600 is operable to carry out portions of the example methods described with reference to FIGURES 14-16 and possibly any other processes or methods disclosed herein. It is to be understood that the methods of FIGURE 14-16 are not carried out solely by MME 1600. At least some operations of the method are performed by one or more other entities.

MME 1600 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause Receiving Unit 1602, and Communicating Unit 1604 and any other suitable units of MME 1600 to perform corresponding functions according one or more embodiments of the present disclosure.

As illustrated in FIGURE 17, MME 1600 includes Receiving Unit 1602 and Communicating Unit 1604. Receiving unit 1602 is configured to receive messages from a network node (e.g., network node (1010)). Communicating Unit 1604 is configured to communicates messages to a network node.

This disclosure includes the following enumerated embodiments.
1. A method (1300) in a user equipment (UE) (1005) to verify an authenticity of a network, in response to providing a Control Plane Service Request (CPSR) non-access stratum (NAS) message comprising user data to a first network node of the network, the method comprising:
   obtaining an indication from the first network node;
   verifying an authenticity of the indication; and
   determining that the user data has been successfully delivered.
2. The method (1300) of embodiment 1, wherein the indication comprises at least one of:
   a NAS message which is security protected with a Message Authentication Code (MAC);
   a random number; and
   a security token calculated using at least one of:
      security keys;
      security information; and
      information provided by the UE (1005).
3. The method (1300) of embodiment 1, wherein the first network node comprises a mobility management entity (MME) (1015).
4. The method (1300) of embodiment 1, wherein obtaining the indication from the first network node of the network comprises obtaining the indication from a second network node, wherein the second network node obtains the indication from the first network node.
5. The method (1300) of embodiment 4, wherein the second network node comprises a Radio Access Network (RAN) node (1010).
6. The method (1300) of embodiment 4, wherein the second network node obtains the indication from the first network node in an S1-AP downlink message.
7. The method (1300) of embodiment 4, wherein the indication is obtained from the second network node in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
8. A method (1300) in a first network node of a network to provide an indication to a user equipment (UE) (1005) to verify an authenticity of the network, in response to the UE (1005) providing a Control Plane Service Request (CPSR) non-access stratum (NAS) message comprising user data to the first network node, the method comprising:
   obtaining the CPSR NAS message comprising user data from the UE (1005); and
   in response to obtaining the CPSR NAS message, providing the indication to the UE (1005), wherein the UE (1005) is configured to verify an authenticity of the indication to determine that the user data has been successfully delivered.
9. The method (1300) of embodiment 8, wherein the indication comprises at least one of:
   a NAS message which is security protected with a Message Authentication Code (MAC);
   a random number; and
   a security token calculated using at least one of:
      security keys;
      security information; and
      information provided by the UE (1005).
10. The method (1300) of embodiment 8, wherein the first network node comprises a mobility management entity (MME) (1015).
11. The method (1300) of embodiment 8, wherein providing the indication to the UE (1005) comprises providing the indication to a second network node, wherein the second network node provides the indication to the UE (1005).
12. The method (1300) of embodiment 11, wherein the second network node comprises a RAN node (1010).
13. The method (1300) of embodiment 11, wherein the first network node provides the indication to the second network node in an S1-AP downlink message.
14. The method (1300) of embodiment 11, wherein the second network node provides the indication to the UE (1005) in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
15. A method (1300) in a second network node to provide an indication to a user equipment (UE) (1005) to verify an authenticity of a network, in response to the UE (1005) providing a Control Plane Service Request (CPSR) non-access stratum (NAS) message comprising user data to a first network node of the network, the method comprising:
   obtaining the CPSR NAS message comprising user data from the UE (1005);
   providing the CPSR NAS message to the first network node;
   receiving the indication from the first network node; and
   providing the indication to the UE (1005), wherein the UE (1005) is configured to verify an authenticity of the indication to determine that the user data has been successfully delivered.
16. The method (1300) of embodiment 15, wherein the second network node comprises a RAN node (1010).
17. The method (1300) of embodiment 15, wherein the indication comprises at least one of:
   a NAS message which is security protected with a Message Authentication Code (MAC);
   a random number; and
   a security token calculated using at least one of:
      security keys;
      security information; and
      information provided by the UE (1005).
18. The method (1300) of embodiment 15, wherein the first network node comprises a mobility management entity (MME) (1015).
19. The method (1300) of embodiment 15, wherein the second network node obtains the indication from the first network node in an S1-AP downlink message.
20. The method (1300) of embodiment 15, wherein the second network node provides the indication to the UE (1005) in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
21. A user equipment (UE) (1005) to verify an authenticity of a network, in response to providing a Control Plane Service Request (CPSR) non-access stratum (NAS) message comprising user data to a first network node of the network, the UE (1005) comprising:
   a memory and processing circuitry communicatively coupled to the memory, the memory and the processing circuitry configured to:
   obtain an indication from the first network node;
   verify an authenticity of the indication; and
   determine that the user data has been successfully delivered.
22. The UE (1005) of embodiment 21, wherein the indication comprises at least one of:
   a NAS message which is security protected with a Message Authentication Code (MAC);
   a random number; and
   a security token calculated using at least one of:
      security keys;
      security information; and
      information provided by the UE (1005).
23. The UE (1005) of embodiment 21, wherein the first network node comprises a mobility management entity (MME) (1015).
24. The UE (1005) of embodiment 21, wherein obtaining the indication from the first network node of the network comprises obtaining the indication from a second network node, wherein the second network node obtains the indication from the first network node.
25. The UE (1005) of embodiment 24, wherein the second network node comprises a RAN node (1010).
26. The UE (1005) of embodiment 24, wherein the second network node obtains the indication from the first network node in an S1-AP downlink message.
27. The UE (1005) of embodiment 24, wherein the indication is obtained from the second network node (1010) in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
28. A first network node of a network for providing an indication to a user equipment (UE) (1005) to verify an authenticity of the network, in response to the UE (1005) providing a Control Plane Service Request (CPSR) non-access stratum (NAS) message comprising user data to the first network node, the first network node comprising:
   a memory and processing circuitry communicatively coupled to the memory, the memory and the processing circuitry configured to:
   obtain the CPSR NAS message comprising user data from the UE (1005); and
   in response to obtaining the CPSR NAS message, provide the indication to the UE (1005), wherein the UE (1005) is configured to verify an authenticity of the indication to determine that the user data has been successfully delivered.
29. The first network node of embodiment 28, wherein the indication comprises at least one of:
   a NAS message which is security protected with a Message Authentication Code (MAC);
   a random number; and
   a security token calculated using at least one of:
      security keys;
      security information; and
      information provided by the UE (1005).
30. The first network node of embodiment 28, wherein the first network node comprises a mobility management entity (MME) (1015).
31. The first network node of embodiment 28, wherein providing the indication to the UE (1005) comprises providing the indication to a second network node, wherein the second network node provides the indication to the UE (1005).
32. The first network node of embodiment 31, wherein the second network node comprises a RAN node (1010).
33. The first network node of embodiment 31, wherein the indication is provided to the second network node in an S1-AP downlink message.
34. The first network node of embodiment 31, wherein the second network node provides the indication to the UE (1005) in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
35. A second network node to provide an indication to a user equipment (UE) (1005) to verify an authenticity of a network, in response to the UE (1005) providing a Control Plane Service Request (CPSR) non-access stratum (NAS) message comprising user data to a first network node of the network, the second network node comprising:
   a memory and processing circuitry communicatively coupled to the memory, the memory and the processing circuitry configured to:
   obtain the CPSR NAS message comprising user data from the UE (1005);
   provide the CPSR NAS message to the first network node;
   obtain the indication from the first network node; and
   provide the indication to the UE (1005), wherein the UE (1005) is configured to verify an authenticity of the indication to determine that the user data has been successfully delivered.
36. The second network node of embodiment 35, wherein the second network node comprises a RAN node (1010).
37. The second network node of embodiment 35, wherein the indication comprises at least one of:
   a NAS message which is security protected with a Message Authentication Code (MAC);
   a random number; and
   a security token calculated using at least one of:
      security keys;
      security information; and
      information provided by the UE (1005).
38. The second network node of embodiment 35, wherein the first network node comprises a mobility management entity (MME) (1015).
39. The second network node of embodiment 35, wherein the indication is obtained from the first network node in an S 1-AP downlink message.
40. The second network node of embodiment 35, wherein the indication is provided to the UE (1005) in at least one of:
   an RRCEarlyDataComplete(-NB) message;
   an RRC message terminating a CIoT EPS CP optimization data transaction;
   a new RRC message defined to include the indication rather than an RRCConnectionSetup(-NB) message;
   an RRC message that releases an RRC connection; and
   a MAC protocol control element.
41. A method (1200) in a user equipment (UE) (1005) to mandate a first network node to provide a first indication to the UE (1005), not after a second network node releases a radio resource control (RRC) connection, the method (1200) comprising:
   providing a Control Plane Service Request (CPSR) non-access stratum (NAS) message comprising user data to the first network node; and
   obtaining the first indication from the first network node, not after the second network node releases the RRC connection.
42. The method (1200) of embodiment 41, wherein the first network node comprises a mobility management entity (MME) (1015).
43. The method (1200) of embodiment 41, wherein the second network node comprises a RAN node (1010).
44. The method (1200) of embodiment 41, wherein the first indication comprises a security protected downlink (DL) NAS message.
45. The method (1200) of embodiment 44, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
46. The method (1200) of embodiment 41, wherein the CPSR NAS message comprises a second indication to the first network node, the second indication requesting that the first network node provide the first indication in response to receiving the CPSR NAS message.
47. The method (1200) of embodiment 46, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
48. The method (1200) of embodiment 46, wherein the second indication comprises a random number appended to the CPSR NAS message and the first indication comprises the random number.
49. The method (1200) of embodiment 41, further comprising providing a second indication to the second network node, the second indication indicating that the second network node is to forward the first indication to the UE (1005) not after the second network node releases the RRC connection, wherein obtaining the first indication from the first network node comprises obtaining the first indication from the second network node, wherein the second network node obtains the first indication from the first network node.
50. The method (1200) of embodiment 49, wherein providing the CPSR NAS message comprising user data to the first network node comprises providing an RRC message comprising the CPSR NAS message and the second indication to the second network node, wherein the second network node provides the CPSR NAS message to the first network node.
51. The method (1200) of embodiment 41, wherein the UE obtains the first indication in at least one of:
   an RRC message, the RRC message comprising at least one of an RRCEarlyDataComplete(-NB) message, a new RRC message comprising a dedicatedDataInfoNAS IE, an RRCConnectionRelease(-NB) message, and a new RRC message configured to carry the DL NAS message and to release the RRC connection; and
   a DLInformationTransfer message.
52. The method (1200) of embodiment 41, further comprising:
   performing an integrity check of the first indication; and
   in response to performing the integrity check, determining that the user data has been successfully delivered.
53. A method (1200) in a first network node to provide a first indication to a user equipment (UE) (1005), not after a second network node releases a radio resource control (RRC) connection, in response to the UE (1005) transmitting a Control Plane Service Request (CPSR) non-access stratum (NAS) message comprising user data, the method comprising:
   obtaining the CPSR NAS message comprising user data from the UE (1005); and
   providing the first indication to the UE (1005), not after the second network node releases the RRC connection.
54. The method (1200) of embodiment 53, wherein the first network node comprises a mobility management entity (MME) (1015).
55. The method (1200) of embodiment 53, wherein the second network node comprises a RAN node (1010).
56. The method (1200) of embodiment 53, wherein the first indication comprises a security protected downlink (DL) non-access stratum (NAS) message.
57. The method (1200) of embodiment 56, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
58. The method (1200) of embodiment 53, wherein the CPSR NAS message comprises a second indication to the first network node, the second indication requesting that the first network node provide the first indication in response to receiving the CPSR NAS message.
59. The method (1200) of embodiment 58, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
60. The method (1200) of embodiment 58, wherein the second indication comprises a random number appended to the CPSR NAS message and the first indication comprises the random number.
61. The method (1200) of embodiment 53, further comprising providing a second indication to the second network node, wherein:
   providing the first indication to the UE (1005) comprises providing the first indication to the second network node, wherein the second network node provides the first indication to the UE (1005); and
   the second indication indicates that the second network node is to provide the first indication to the UE (1005) not after releasing the RRC connection.
62. A method (1200) in a second network node to provide a first indication to a user equipment (UE) (1005), not after releasing a radio resource control (RRC) connection, in response to the UE (1005) transmitting a Control Plane Service Request (CPSR) NAS message comprising user data, the method comprising:
   obtaining the CPSR NAS message comprising user data from the UE (1005);
   providing the CPSR NAS message to a first network node;
   obtaining the first indication from the first network node;
   providing the first indication to the UE (1005); and
   releasing the RRC connection, wherein the RRC connection is released not after providing the first indication to the UE (1005).
63. The method (1200) of embodiment 62, wherein the first network node comprises a mobility management entity (MME) (1015).
64. The method (1200) of embodiment 62, wherein the second network node comprises a RAN node (1010).
65. The method (1200) of embodiment 62, wherein the first indication comprises a security protected downlink (DL) non-access stratum (NAS) message.
66. The method (1200) of embodiment 65, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
67. The method (1200) of embodiment 62, wherein the CPSR NAS message comprises a second indication to the first network node, the second indication requesting that the first network node provide the first indication in response to receiving the CPSR NAS message.
68. The method (1200) of embodiment 67, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
69. The method (1200) of embodiment 67, wherein the second indication comprises a random number appended to the CPSR NAS message and the first indication comprises the random number.
70. The method (1200) of embodiment 62, further comprising obtaining a second indication from the UE (1005) that the second network node is to transmit the first indication to the UE (1005) not after releasing the RRC connection, wherein the second network node is configured to release the RRC connection not before transmitting the first indication to the UE (1005) and not after a predefined period of time.
71. The method (1200) of embodiment 70, wherein the second indication is obtained in an RRC message comprising the CPSR NAS message.
72. The method (1200) of embodiment 62 further comprising receiving a second indication from the first network node to provide the first indication to the UE (1005) not after releasing the RRC connection.
73. A user equipment (UE) (1005) to mandate a first network node to provide a first indication to the UE (1005), not after a second network node releases a radio resource control (RRC) connection, the user equipment (UE) (1005) comprising:
   a memory and processing circuitry communicatively coupled to the memory, the memory and the processing circuitry configured to:
   provide a Control Plane Service Request (CPSR) non-access stratum (NAS) message comprising user data to the first network node; and
   obtain the first indication from the first network node, not after the second network node releases the RRC connection.
74. The UE (1005) of embodiment 73, wherein the first network node comprises a mobility management entity (MME) (1015).
75. The UE (1005) of embodiment 73, wherein the second network node comprises a RAN node (1010).
76. The UE (1005) of embodiment 73, wherein the first indication comprises a security protected downlink (DL) NAS message.
77. The UE (1005) of embodiment 76, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
78. The UE (1005) of embodiment 73 wherein the CPSR NAS message comprises a second indication to the first network node, the second indication requesting that the first network node provide the first indication in response to receiving the CPSRNAS message.
79. The UE (1005) of embodiment 78, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
80. The UE (1005) of embodiment 78, wherein the second indication comprises a random number appended to the CPSR NAS message and the first indication comprises the random number.
81. The UE (1005) of embodiment 73, wherein the memory and the processing circuitry are further configured to provide a second indication to the second network node, the second indication indicating that the second network node is to forward the first indication to the UE (1005) not after the second network node releases the RRC connection, wherein obtaining the first indication from the first network node comprises obtaining the first indication from the second network node, wherein the second network node obtains the first indication from the first network node.
82. The UE (1005) of embodiment 81, wherein providing the CPSR NAS message comprising user data to the first network node comprises providing an RRC message comprising the CPSR NAS message and the second indication to the second network node, wherein the second network node provides the CPSR NAS message to the first network node.
83. The UE (1005) of embodiment 73, wherein the UE obtains the first indication in at least one of:
   an RRC message, the RRC message comprising at least one of an RRCEarlyDataComplete(-NB) message, a new RRC message comprising a dedicatedDataInfoNAS IE, an RRCConnectionRelease(-NB) message, and a new RRC message configured to carry the DL NAS message and to release the RRC connection; and
   a DLInformationTransfer message.
84. The UE (1005) of embodiment 73, wherein the memory and the processing circuitry are further configured to:
   perform an integrity check of the first indication; and
   in response to performing the integrity check, determine that the user data has been successfully delivered.
85. A first network node for providing a first indication to a user equipment (UE) (1005), not after a second network node releases a radio resource control (RRC) connection, in response to the UE (1005) transmitting a Control Plane Service Request (CPSR) non-access stratum (NAS) message comprising user data, the first network node comprising:
   a memory and processing circuitry communicatively coupled to the memory, the memory and the processing circuitry configured to:
   obtain the CPSR NAS message comprising user data from the UE (1005); and
   provide the first indication to the UE (1005), not after the second network node releases the RRC connection.
86. The first network node of embodiment 85, wherein the first network node comprises a mobility management entity (MME) (1015).
87. The first network node of embodiment 85, wherein the second network node comprises a RAN node (1010).
88. The first network node of embodiment 85, wherein the first indication comprises a security protected downlink (DL) non-access stratum (NAS) message.
89. The first network node of embodiment 88, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
90. The first network node of embodiment 85, wherein the CPSR NAS message comprises a second indication to the first network node, the second indication requesting that the first network node provide the first indication in response to receiving the CPSR NAS message.
91. The first network node of embodiment 90, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
92. The first network node of embodiment 90, wherein the second indication comprises a random number appended to the CPSR NAS message and the first indication comprises the random number.
93. The first network node of embodiment 85, wherein the memory and the processing circuitry are further configured to provide a second indication to the second network node, wherein:
   providing the first indication to the UE (1005) comprises providing the first indication to the second network node, wherein the second network node provides the first indication to the UE (1005); and
   the second indication indicates that the second network node is to provide the first indication to the UE (1005) not after releasing the RRC connection.
94. A second network node for providing a first indication to a user equipment (UE) (1005), not after releasing a radio resource control (RRC) connection, in response to the UE (1005) transmitting a Control Plane Service Request (CPSR) NAS message comprising user data, the second network node comprising:
   a memory and processing circuitry communicatively coupled to the memory, the memory and the processing circuitry configured to:
   obtain the CPSRNAS message comprising user data from the UE (1005);
   provide the CPSRNAS message to a first network node;
   obtain the first indication from the first network node;
   provide the first indication to the UE (1005); and
   release the RRC connection, wherein the RRC connection is released not after providing the first indication to the UE (1005).
95. The second network node of embodiment 94, wherein the first network node comprises a mobility management entity (MME) (1015).
96. The second network node of embodiment 94, wherein the second network node comprises a RAN node (1010).
97. The second network node of embodiment 94, wherein the first indication comprises a security protected downlink (DL) non-access stratum (NAS) message.
98. The second network node of embodiment 97, wherein the security protected DL NAS message comprises at least one of:
   dummy data and a NAS Message Authentication Code (MAC);
   the NAS MAC without the dummy data;
   the dummy data and a SERVICE ACCEPT message;
   the dummy data and an ESM DATA TRANSPORT message; and
   the ESM DATA TRANSPORT message without the dummy data.
99. The second network node of embodiment 94, wherein the CPSR NAS message comprises a second indication to the first network node, the second indication requesting that the first network node is to provide the first indication in response to receiving the CPSR NAS message.
100. The second network node (1010) of embodiment 99, wherein the second indication comprises at least one of:
   an absence of a release assistance indication (RAI) in an ESM DATA TRANSPORT message of the CPSR NAS message, even if the UE (1005) expects no further uplink (UL) or DL data transmissions;
   a presence of the RAI in the ESM DATA TRANSPORT message of the CPSR, the RAI set to indicate that the UE (1005) expects a single DL data transmission and no further UL data transmissions;
   an indication in a new field of the ESM DATA TRANSPORT message of the CPSR NAS message;
   an indication in a new field of the CPSR NAS message; and
   an indication using spare bits of the RAI field in the ESM DATA TRANSPORT message of the CPSR NAS message.
101. The second network node of embodiment 99, wherein the second indication comprises a random number appended to the CPSR NAS message and the first indication comprises the random number.
102. The second network node of embodiment 94, wherein the memory and the processing circuitry are further configured to obtain a second indication from the UE (1005) that the second network node is to transmit the first indication to the UE (1005) not after releasing the RRC connection, wherein the second network node is configured to release the RRC connection not before transmitting the first indication to the UE (1005) and not after a predefined period of time.
103. The second network node of embodiment 102, wherein the second indication is obtained in an RRC message comprising the CPSR NAS message.
104. The second network node (1010) of embodiment 94, wherein the memory and the processing circuitry are further configured to receive a second indication from the first network node to provide the first indication to the UE (1005) not after releasing the RRC connection.
105. A method (1600) in a network node (1010) to verify an authenticity of a user equipment (UE) (1005) to which the network node (1010) is sending a mobile-terminated (MT) downlink (DL) Non-Access Stratum (NAS) message comprising user data, the method comprising:
   transmitting the MT DL NAS message comprising user data to the UE (1005);
   obtaining at least one of a security protected NAS message and security information from the UE (1005); and
   verifying the authenticity of the UE (1005).
106. The method (1600) of embodiment 105, wherein the security protected NAS message comprises at least one of a Control Plane Service Request (CPSR) NAS message without UL data and a new security protected NAS message.
107. The method (1600) of embodiment 105, wherein obtaining the at least one of the security protected NAS message and the security information comprises receiving an RRC message, the RRC message comprising the at least one of the security protected NAS message and the security information.
108. The method (1600) of embodiment 107, wherein the RRC message comprises at least one of an RRCEarlyDataRequest message and a new RRC message, the new RRC message defined with an access stratus (AS) security token.
109. A method (1600) in a user equipment (UE) (1005) to mandate the UE (1005) to transmit at least one of a security protected NAS message and security information to a network node (1010), in response to the network node (1010) sending a mobile-terminated (MT) downlink (DL) Non-Access Stratum (NAS) message comprising user data, the method comprising:
   obtaining the MT DL NAS message comprising the user data; and
   transmitting at least one of a security protected NAS message and security information to the network node (1010), wherein the network node (1010) is configured to verify an authenticity of the UE (1005) using the at least one of the security protected NAS message and the security information.
110. The method (1600) of embodiment 109, wherein the security protected NAS message comprises at least one of a Control Plane Service Request (CPSR) NAS message without UL data and a new security protected NAS message.
111. The method (1600) of embodiment 109, wherein transmitting the at least one of the security protected NAS message and the security information comprises transmitting an RRC message, the RRC message comprising the at least one of the security protected NAS message and the security information.
112. The method (1600) of embodiment 111, wherein the RRC message comprises at least one of an RRCEarlyDataRequest message and a new RRC message, the new RRC message defined with an access stratus (AS) security token.
113. A network node (1010) for verifying an authenticity of a user equipment (UE) (1005) to which the network node (1010) is sending a mobile-terminated (MT) downlink (DL) Non-Access Stratum (NAS) message comprising user data, the network node (1010) comprising:
   a memory and processing circuitry communicatively coupled to the memory, the memory and the processing circuitry configured to:
   transmit the MT DL NAS message comprising user data to the UE (1005);
   obtain at least one of a security protected NAS message and security information from the UE (1005); and
   verify the authenticity of the UE (1005).
114. The network node (1010) of embodiment 113, wherein the security protected NAS message comprises at least one of a Control Plane Service Request (CPSR) NAS message without UL data and a new security protected NAS message.
115. The network node (1010) of embodiment 113, wherein obtaining the at least one of the security protected NAS message and the security information comprises receiving an RRC message, the RRC message comprising the at least one of the security protected NAS message and the security information.
116. The network node (1010) of embodiment 115, wherein the RRC message comprises at least one of an RRCEarlyDataRequest message and a new RRC message, the new RRC message defined with an access stratus (AS) security token.
117. A user equipment (UE) (1005) for transmitting at least one of a security protected NAS message and security information to a network node (1010), in response to the network node (1010) sending a mobile-terminated (MT) downlink (DL) Non-Access Stratum (NAS) message comprising user data, the UE (1005) comprising:
   a memory and processing circuitry communicatively coupled to the memory, the memory and the processing circuitry configured to:
   obtain the MT DL NAS message comprising the user data; and
   transmit at least one of a security protected NAS message and security information to the network node (1010), wherein the network node (1010) is configured to verify an authenticity of the UE (1005) using the at least one of the security protected NAS message and the security information.
118. The UE (1005) of embodiment 117, wherein the security protected NAS message comprises at least one of a Control Plane Service Request (CPSR) NAS message without UL data and a new security protected NAS message.
119. The UE (1005) of embodiment 117, wherein transmitting the at least one of the security protected NAS message and the security information comprises transmitting an RRC message, the RRC message comprising the at least one of the security protected NAS message and the security information.
120. The UE (1005) of embodiment 119, wherein the RRC message comprises at least one of an RRCEarlyDataRequest message and a new RRC message, the new RRC message defined with an access stratus (AS) security token.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- BI: Backoff Indicator
- BSR: Buffer Status Report
- CA: Carrier Aggregation
- Cat-M1: Category M1
- Cat M2: Category M2
- CC: Carrier Component
- CCCH SDU: Common Control Channel SDU
- CDMA: Code Division Multiplexing Access
- CE: Coverage Enhancement
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eMTC: enhanced Machine-Type-Communication
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- IoT: Internet of Things
- LOS: Line of Sight
- LPP: LTE Positioning Protocol
- LTE: Long-Term Evolution
- M2M: Machine-to-Machine
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MTC: Machine Type Communication
- MSC: Mobile Switching Center
- NAS: Non-Access Stratum
- NB-IoT: Narrowband Internet of Things
- NPDCCH: Narrowband Physical Downlink Control Channel
- (N)PRACH: (Narrowband) Physical Random Access Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDCP: Packet Data Convergence Protocol
- PDP: Profile Delay Profile
- PDSCH: Physical Downlink Shared Channel
- PDU: Protocol Data Unit
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRB: Physical Resource Block
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RA: Random Access
- RAPID: Random Access Preamble Identifier
- RAN: Radio Access Network
- RAR: Random Access Response
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR
- Reference Signal: Received Power
- RSRQ: Reference Signal Received Quality OR
- Reference Symbol: Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TBS: Transport Block Size
- TDD: Time Division Duplex
- TDOA: Time Difference of Arrival
- TOA: Time of Arrival
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method (1200) in a user equipment (UE) (1005) to mandate a first network node to provide a first indication to the UE (1005), not after a second network node releases a radio resource control (RRC) connection, the method (1200) comprising:
providing a Control Plane Service Request (CPSR) non-access stratum (NAS) message comprising user data to the first network node; and
obtaining the first indication from the first network node, not after the second network node releases the RRC connection.

2. The method (1200) of Claim 1, wherein the CPSR NAS message comprises a second indication to the first network node, the second indication requesting that the first network node provide the first indication in response to receiving the CPSR NAS message.

3. The method (1200) of Claim 2, wherein the second indication comprises a random number appended to the CPSR NAS message and the first indication comprises the random number.

4. The method (1200) of Claim 1, further comprising providing a second indication to the second network node, the second indication indicating that the second network node is to forward the first indication to the UE (1005) not after the second network node releases the RRC connection, wherein obtaining the first indication from the first network node comprises obtaining the first indication from the second network node, wherein the second network node obtains the first indication from the first network node.

5. A method (1200) in a first network node to provide a first indication to a user equipment (UE) (1005), not after a second network node releases a radio resource control (RRC) connection, in response to the UE (1005) transmitting a Control Plane Service Request (CPSR) non-access stratum (NAS) message comprising user data, the method comprising:
obtaining the CPSR NAS message comprising user data from the UE (1005); and
providing the first indication to the UE (1005), not after the second network node releases the RRC connection.

6. The method (1200) of Claim 5, wherein the CPSR NAS message comprises a second indication to the first network node, the second indication requesting that the first network node provide the first indication in response to receiving the CPSR NAS message.

7. The method (1200) of Claim 6, wherein the second indication comprises a random number appended to the CPSR NAS message and the first indication comprises the random number.

8. The method (1200) of Claim 5, further comprising providing a second indication to the second network node, wherein:
providing the first indication to the UE (1005) comprises providing the first indication to the second network node, wherein the second network node provides the first indication to the UE (1005); and
the second indication indicates that the second network node is to provide the first indication to the UE (1005) not after releasing the RRC connection.

9. A method (1200) in a second network node to provide a first indication to a user equipment (UE) (1005), not after releasing a radio resource control (RRC) connection, in response to the UE (1005) transmitting a Control Plane Service Request (CPSR) NAS message comprising user data, the method comprising:
obtaining the CPSR NAS message comprising user data from the UE (1005);
providing the CPSR NAS message to a first network node;
obtaining the first indication from the first network node;
providing the first indication to the UE (1005); and
releasing the RRC connection, wherein the RRC connection is released not after providing the first indication to the UE (1005).

10. The method (1200) of Claim 9, wherein the CPSR NAS message comprises a second indication to the first network node, the second indication requesting that the first network node provide the first indication in response to receiving the CPSR NAS message.

11. The method (1200) of Claim 10, wherein the second indication comprises a random number appended to the CPSR NAS message and the first indication comprises the random number.

12. The method (1200) of Claim 9, further comprising obtaining a second indication from the UE (1005) that the second network node is to transmit the first indication to the UE (1005) not after releasing the RRC connection, wherein the second network node is configured to release the RRC connection not before transmitting the first indication to the UE (1005) and not after a predefined period of time.

13. The method (1200) of Claim 9 further comprising receiving a second indication from the first network node to provide the first indication to the UE (1005) not after releasing the RRC connection.

14. The method (1200) of Claim 1, 5 or 9, wherein the first network node comprises a mobility management entity (MME) (1015), and/or the second network node comprises a RAN node (1010).

15. A user equipment (UE) (1005) to mandate a first network node to provide a first indication to the UE (1005), not after a second network node releases a radio resource control (RRC) connection, the user equipment (UE) (1005) comprising:
a memory and processing circuitry communicatively coupled to the memory, the memory and the processing circuitry configured to perform the method of any of claims 1 to 4.

16. A first network node for providing a first indication to a user equipment (UE) (1005), not after a second network node releases a radio resource control (RRC) connection, in response to the UE (1005) transmitting a Control Plane Service Request (CPSR) non-access stratum (NAS) message comprising user data, the first network node comprising:
a memory and processing circuitry communicatively coupled to the memory, the memory and the processing circuitry configured to perform the method of any of claims 5 to 8.

17. A second network node for providing a first indication to a user equipment (UE) (1005), not after releasing a radio resource control (RRC) connection, in response to the UE (1005) transmitting a Control Plane Service Request (CPSR) NAS message comprising user data, the second network node comprising:
a memory and processing circuitry communicatively coupled to the memory, the memory and the processing circuitry configured to perform the method of any of claims 9 to 13.
